# EUROPEAN PATENT APPLICATION

(11) **EP 1 207 652 A2**
(43) Date of publication of application: **22.05.2002**
(21) Application number: 01126570.9
(22) Date of filing: 15.11.2001
(51) Int. Cl.: H04L 12/24

(54) **Method and apparatus for building a network**

(30) Priority: 16.11.2000 JP 2000349827
(71) Applicant: Knowledge Modeling Institute Inc., Nakano-ku, Tokyo (JP)
(72) Inventor: Matsuzuki, Tadao, Shibuya-ku, Tokyo 150-0001 (JP)
(74) Representative: Reinhard - Skuhra - Weise & Partner

(57) **Abstract**

The present invention provides a network building method. The network building method comprises the following steps of setting regional information using a computer (A1), setting place information using the computer at the region (A1), setting information on the number of computers used at the place (A2), setting at least address and identification information of a plurality of the computers (A3, A4), setting a parent computer of the computers used at each place (A5), setting at least one grand computer of the computers used at each place (A5), setting information reception channel information of the grand computer (A6), setting information transmission channel information of a child computer depending on the grand computer (A6), setting information transmission and reception channel information of the parent computer (A6), setting information transmission channel information of a child computer depending on the parent computer (A6), and setting these information as network information.

## Description

The present invention relates to a network building method, and management report acquiring method and apparatus.

In recent years, computers and networks have been developed and improved, and thereby, a method of acquiring reference information using a network has been employed in company management.

However, there are many cases where network building is designed personally by the company itself; for this reason, the built network is lacks flexibility. Further, in the case of acquiring reference information, there is no uniformity; for this reason, much time and labor is required to classify and analyze the acquired information.

Moreover, recently, company amalgamation and separation cycles have become faster, and thus, upon every company amalgamation and separation, a computer system design must be remade. For this reason, a large amount of money must be spent.

Accordingly, it is an object of the present invention to provide a network building method, and management report acquiring method and apparatus, which can readily build a network regardless of company, company group, and another company.

Further, another object of the present invention is to provide a network building method, and management report acquiring method and apparatus, which can readily build a network even if a company is amalgamated and separated.

Further, another object of the present invention is to provide a network building method, and management report acquiring method and apparatus, which can readily build a network suitable for various business types by merely changing the business terms.

In order to achieve the above objects, the present invention provides a network building method comprising the following steps of:
setting regional information using a computer;
setting place information using the computer at the region;
setting information on the number of computers used at the place;
setting at least address and identification information of a plurality of the computers;
setting a parent computer of the computers used at each place;
setting at least one grand computer of the computers used at each place;
setting information reception channel information of the grand computer;
setting information transmission channel information of a child computer depending on the grand computer;
setting information transmission and reception channel information of the parent computer;
setting information transmission channel information of a child computer depending on the parent computer; and
delivering this setup information to each computer.

According to the present invention, information transmission and reception channel are determined, and then, information is acquired to the ground computer.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a flowchart to explain a procedure of network information preparation processing employed in the present invention;
FIG. 2 is a view showing a screen displayed in the network information preparation processing;
FIG. 3 is a diagram to explain the network information preparation progress;
FIG. 4 is a diagram showing a network information table;
FIG. 5 is a view showing a screen displayed when setting transmission and reception channel of network information;
FIG. 6 is a view showing a screen displayed when setting transmission and reception channels of network information;
FIG. 7 is a view showing a screen displaying setting of transmission and reception channels of network information;
FIG. 8 is a view showing a screen displaying setting of transmission and reception channels of network information;
FIG. 9A and FIG. 9B are views showing a screen displaying setting transmission and reception channels of network information;
FIG. 10 is a flowchart to explain a procedure of setting transmission and reception channels of network information;
FIG. 11 is a diagram to explain a network building state;
FIG. 12 is a flowchart showing a procedure of delivering network information;
FIG. 13 is a flowchart showing a procedure of transmitting data to be transmitted to a target computer using network information;
FIG. 14 is a block diagram showing a configuration of a computer according to the present invention;
FIG. 15 is a view to explain a procedure of setting a work system for each computer according to the present invention;
FIG. 16 is a view showing a setup screen of the above work system;
FIG. 17 is a view showing a setup screen of the above work system;
FIG. 18 is a view to explain a limited information preparation for each computer;
FIG. 19 is a diagram showing a middle header (internal control information) used in a system according to the present invention;
FIG. 20 is a diagram showing a generation and saving district of the middle header used in the system according to the present invention;
FIG. 21 is a diagram to explain a data base structure of the system according to the present invention;
FIG. 22 is a view showing a graph display based on the data base structure of the system according to the present invention;
FIG. 23 is a flowchart showing an operation when data is inputted into the computer according to the present invention;
FIG. 24 is a diagram to explain a system of data sorting of the computer according to the present invention;
FIG. 25 is a diagram to explain data storage executed in the computer according to the present invention;
FIG. 26 is a diagram to explain another embodiment of data storage example according to the present invention;
FIG. 27 is a view to explain a decision item of the middle header according to the present invention;
FIG. 28 is a diagram showing a decision information processing routine according to the present invention;
FIG. 29 is a view to explain a depreciation data processing function of the middle header according to the present invention;
FIG. 30 is a view to explain another example using the network information according to the present invention;
FIG. 31 is a view to explain another configuration of the middle header according to the present invention;
FIG. 32 is a view showing a display example in the case where a title transfer achievement generation estimated date, which is one of the middle header items according to the present invention, is clicked, and is a view to explain the way to use an achievement generation estimation table;
FIG. 33A and FIG. 33B are flowcharts to explain a title transfer achievement generation estimation table routine and an achievement check processing routine in the system of the present invention, respectively; and
FIG. 34 is a diagram to explain another application of the system of the present invention.

The embodiment of the present invention will be described below with reference to the accompanying drawings.

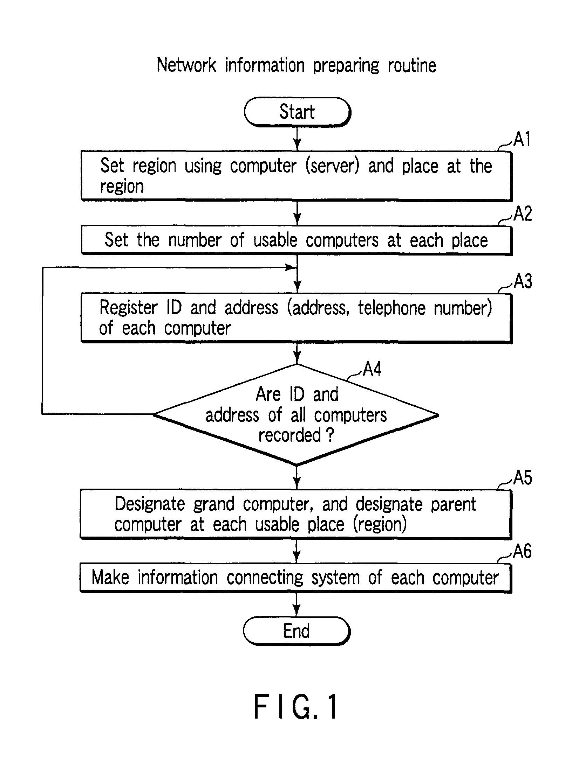

FIG. 1 is a flowchart showing a procedure when building a network between a plurality of computers in a computer management room of a company introducing a plurality of computers.

The network is built by a specified person of the company. When a network building program is operated, a regional setup screen for setting computers is displayed on a screen. Then, a user inputs a regional name to a regional input section on the screen (step A1).

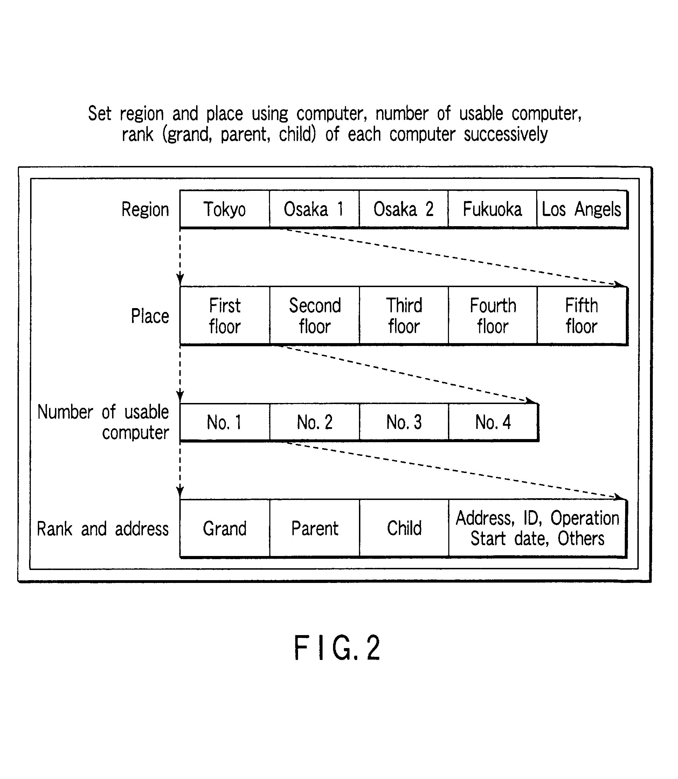

FIG. 2 shows a screen example in which Tokyo, Osaka 1, Osaka 2, Fukuoka, and Los Angels are inputted as the regional name.

Next, when the user moves a cursor on the inputted regional name position, and clicks the selected regional name, a computer usable place in the region can be set (step A1).

In FIG. 2, there is shown a state that Tokyo is selected. In this case, a table for inputting a computer usable place is displayed. The user installs the computer on first to fifth floors of the Tokyo head office. Then, the user inputs the first to fifth floors as the computer usable places to the above table.

Subsequently, when the user moves the cursor to the computer usable place name position, and clicks the selected place name, the number of usable computers in the place can be set (step A2).

FIG. 2 shows a state that the first floor of the Tokyo head office is clicked. Then, a usable computer number input table is displayed. When the user inputs the number of usable computers to the usable computer number input table, a number display corresponding to the inputted number of usable computers is displayed. FIG. 2 shows a setup state that four (No. 1 to No. 4) computers are used on the first floor of Tokyo head office. In the same manner as above, the number of computers used at each place is set (step A2).

The user inputs the number of usable computers with respect to all usable places, and thereafter, can set an address to all computers (step A3, A4). In this case, as shown in FIG. 2, a computer temporary number is displayed on the screen; therefore, the user moves the cursor onto a desired computer temporary number, and then, clicks it. Then, a table for setting a computer rank and an address is displayed.

In the example of FIG. 2, there is shown a state that a table for setting a rank for the first computer on the first floor of the Tokyo head office and an address is displayed.

Grand, parent (middle) and child (slave) are prepared as computer rank. The ranking processing is carried out in step A5.

In the next step A6, an information connecting system table for each computer is made. In step A6, in addition to the above network information later described, processing and means for setting transmission file information including company management status data may be included as information to be transmitted by each computer. Further, in step A6, processing and means for delivering network information stored in each storage means may be included.

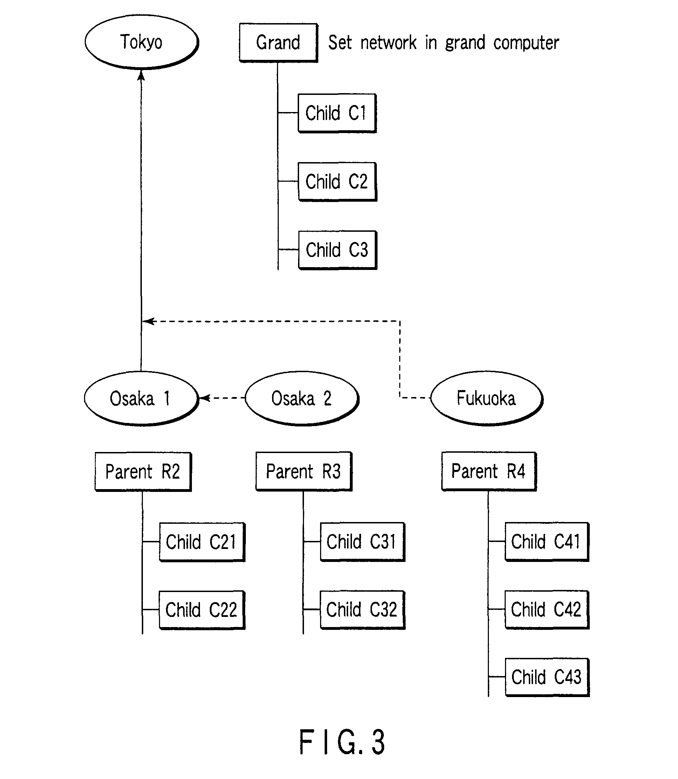

The following is a description on FIG. 3. Now, as shown in FIG. 3, in the Tokyo head office, one computer is set as grand (main) computer, and other three computers are set as child (slave). Further, in Osaka 1, one computer is set as parent (middle) R2, and other two computers are set as child C21 and C22. Likewise, in Osaka 2, one computer is set as parent R3, and other two computers are set as child C31 and C32. In Fukuoka, one computer is set as parent R4, and other three computers are set as child C41, C42 and C43. This processing is carried out in step A5 of FIG. 1.

Further, in a rank and address input table, a network information input section is prepared. The network information is transmission channel information and reception channel information that indicates which computer can transmit information to which computer and which computer can receive information from which computer.

The following is a description of the case where a network shown by a dotted line in FIG. 3 is built.

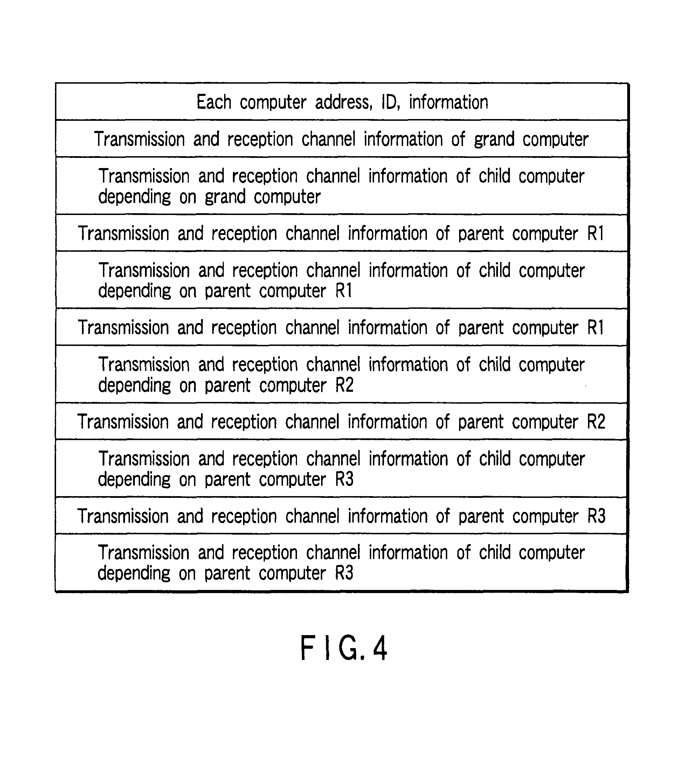

The computer rank is set, and thereafter, transmission and reception channel information are set with respect to each computer. More specifically, as shown in FIG. 4, transmission and reception channel information of the grand computer is set, and then, transmission and reception channel information of the child computer depending on the grand computer is set. Next, transmission and reception channel information of the parent computer R2 and the child computers C21 and C22 depending on the parent computer R2 is set. Further, transmission and reception channel information of the parent computer R3 and the child computers C31 and C32 depending on the parent computer R3 is set. Furthermore, transmission and reception channel information of the parent computer R4 and the child computers C41, C42 and C43 depending on the parent computer R4 is set.

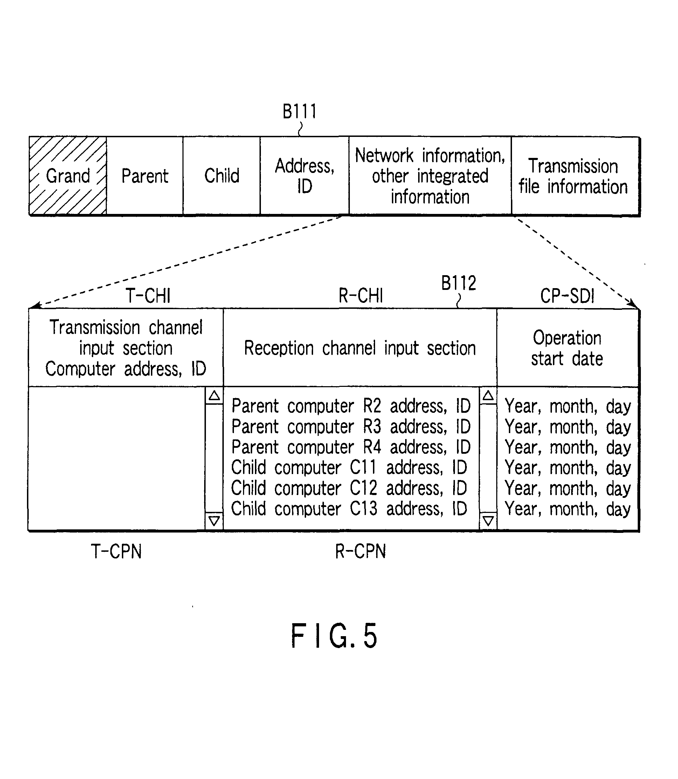

FIG. 5 to FIG. 9 shows a screen when the above transmission and reception channel information is set.

FIG. 5 shows a state of displaying an input screen B112 when transmission and reception channel information of the grand computer is set. As described in FIG. 1 and FIG. 2, the ID and address of each computer are previously registered. Further, the computer rank (grand, parent, and child) is registered.

For example, in FIG. 2, when the user clicks the grand computer position, a screen B111 as shown in FIG. 5 is displayed. Next, on the screen B111, when the user moves the cursor to the network information position, and clicks it, the screen B112 as shown in FIG. 5 is displayed. In the screen B112, there are shown a transmission channel input section (T-CH), a reception channel input section (R-CH), and an operation start date input section (CP-SD).

Computer address and ID are inputted to the transmission channel input section T-CH. In this embodiment, the grand computer is used as the final terminal (top terminal); therefore, no transmission channel is inputted to there. Next, the computer address and ID which are the grand computer should receive information are registered in the reception channel input section R-CH. In this embodiment, as described in FIG. 3, there is a need of receiving information from child computers C11, C12 and C13 and information from parent computers R2 and R4. Thus, the address and ID of each computer are registered in a reception channel computer name list section R-CPN.

In the registration work, the user clicks a desired computer name portion, and thereby, the desired computer name is registered. This results from the following cause; more specifically, as described in FIG. 1, the computer name and address are already registered. Therefore, the user operates (depresses) a cursor button corresponding to the desired portion, and thereby, the registered computer name and address are displayed.

When the address and ID of each computer are registered, the user can input the operation start date of each computer. Of course, when the user inputs the past date to 00000 range at the start date, the past date is used as operation stop information.

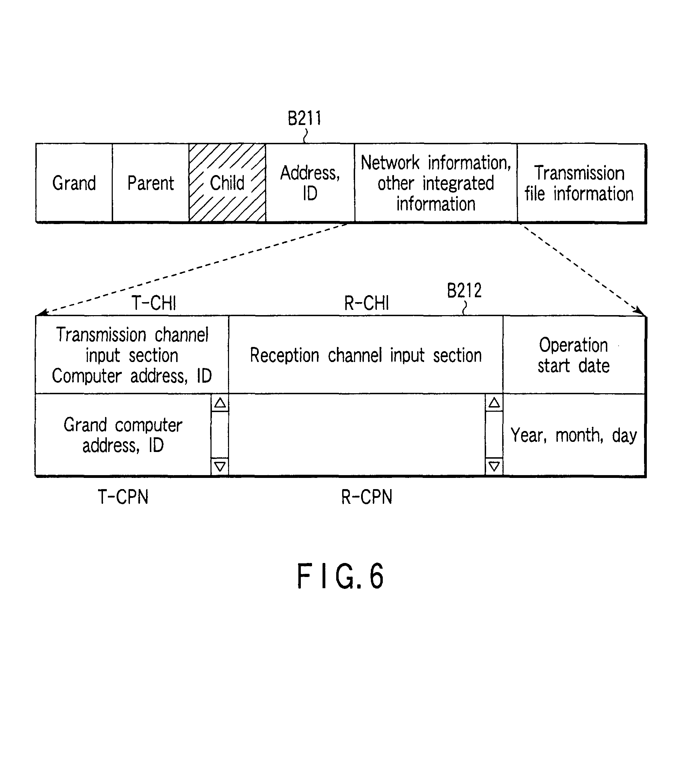

FIG. 6 shows an example displaying transmission and reception channel information input screens B211 and B212 of the child computer depending on the grand computer. These screens B211 and B212 are displayed via a selection path of each item on the screen of FIG. 2. As described in FIG. 3, the information transmission destination of the child computer depending on the grand computer is limited to the grand computer. In this case, as shown in FIG. 6, grand computer address and ID are automatically registered in the transmission channel computer name list section T-CPN. In this case, for each child computer, the operation start date may be registered.

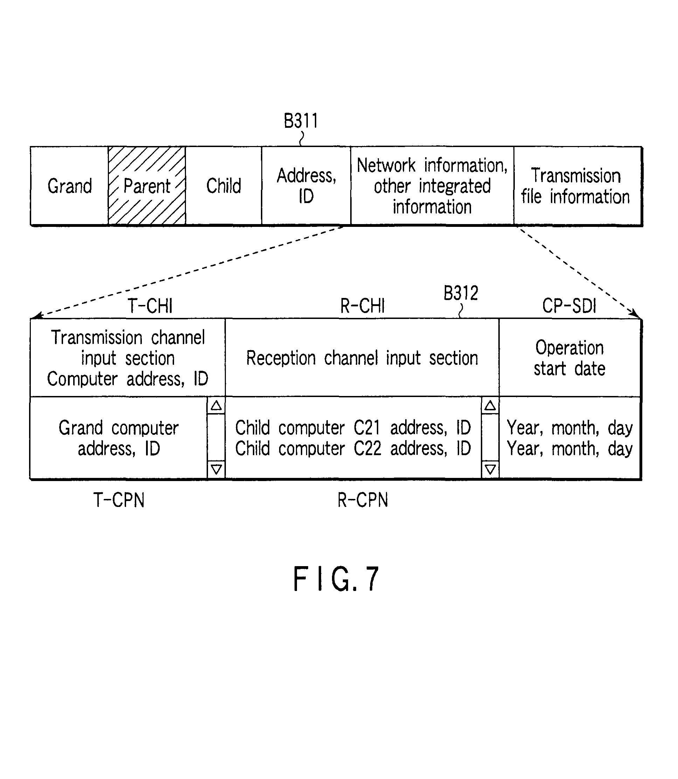

FIG. 7 shows an example displaying transmission and reception channel information input screens B311 and B312 of the parent computer R2. The transmission channel and the reception channel of the parent computer R2 are respectively set toward the grand computer and the child computers C21 and C22 so as to correspond to the network shown in FIG. 3.

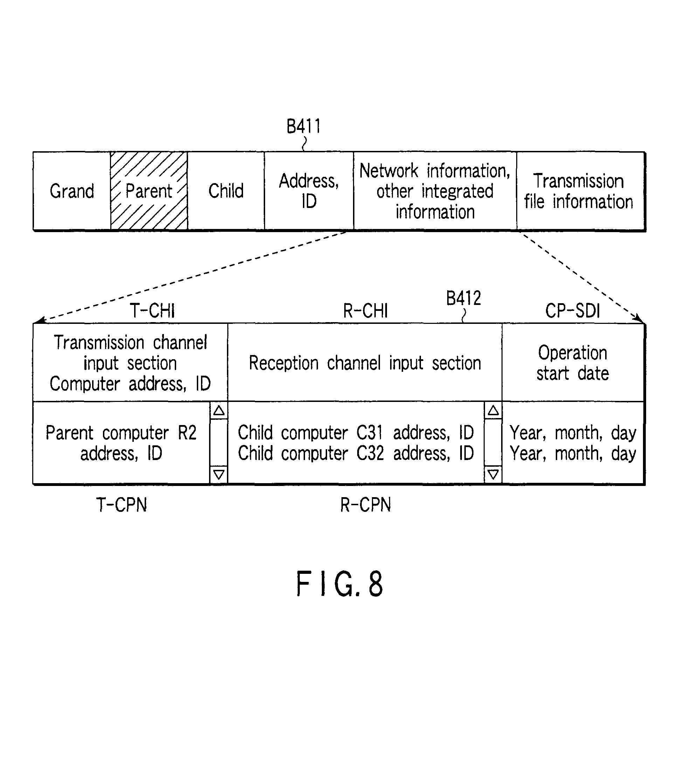

FIG. 8 shows an example displaying transmission and reception channel information input screens B411 and B412 of the parent computer R3. The transmission channel and the reception channel of the parent computer R3 are respectively set toward the parent computer R2 and the child computers C31 and C32 so as to correspond to the network shown in FIG. 3.

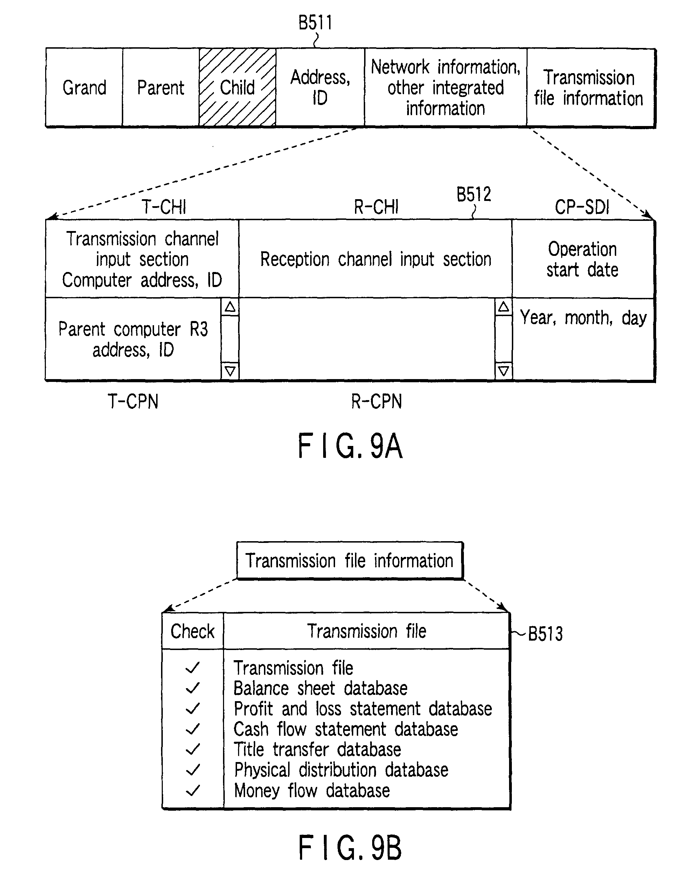

FIG. 9A shows an example displaying transmission and reception channel information input screens B511 and B512 of the child computer C31 or C32. The transmission channel of the child computer C31 or C32 is set toward the parent computer R3 so as to correspond to the network shown in FIG. 3.

FIG. 9B shows a screen B513 when selecting file information to be transmitted. As a file to be transmitted, it is possible to set various data bases, such as (operation) management reports relative to company operation, described later.

More specifically, the file includes a balance sheet database, a profit and loss statement database, a cash flow statement database, a title transfer database, a physical distribution database, a money flow database, etc. A file to be transmitted may be checkmarked.

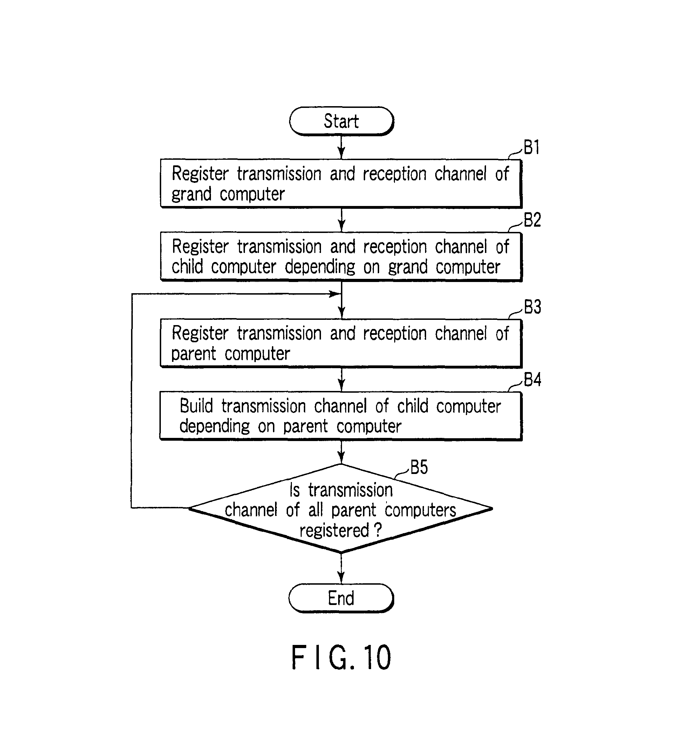

FIG. 10 is a flowchart showing a procedure for setting the above transmission and reception channel.

When a transmission and reception channel setup function starts, the transmission and reception channel to the grand computer is set (step B1). Next, the transmission and reception channel to the child (slave) computer of the grand computer is set (step B2).

Subsequently, the transmission and reception channel to the parent (middle) computer is set (step B3). Next, the transmission and reception channel to the child computer depending on the parent computer is set (step B4). Next, a check is made whether the setup of a parent computer is completed (step B5). If the check is completed, the setup function ends.

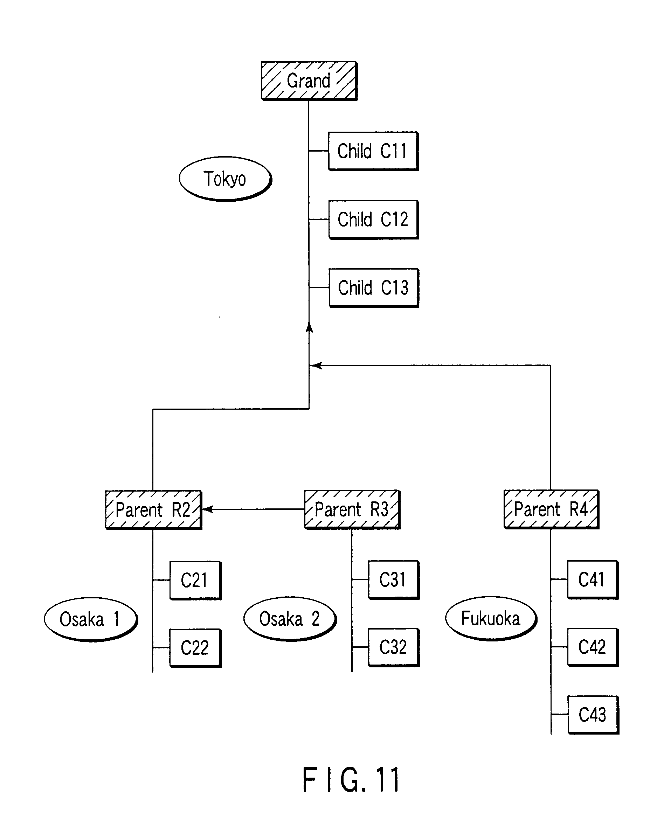

FIG. 11 is a schematic diagram showing the whole network constructed in the case where the transmission and reception channel is set in the above manner. As seen from FIG. 11, in the Tokyo area, one grand computer and three child computers are registered. Further, in the Osaka area, two parent computers and two child computers depending on each of two parent computers are registered. Furthermore, in the Fukuoka area, one parent computer and three child computers depending on one parent computer are registered.

In this system, the operation start date is given to each computer, therefore, it is possible to operate each computer from a desired date if a company is amalgamated or separated. Further, for each region and place, the operation date can be set. Furthermore, the network is readily built between the company and group company and between the company and other company, in addition to the one inside the company.

The network information is built in one computer (grand computer in the above case), and then, is delivered to each computer. Each computer refers to its own rank and network information having ID so as to specify a partner to whom information should be transmitted, and to specify a partner whom receives this information.

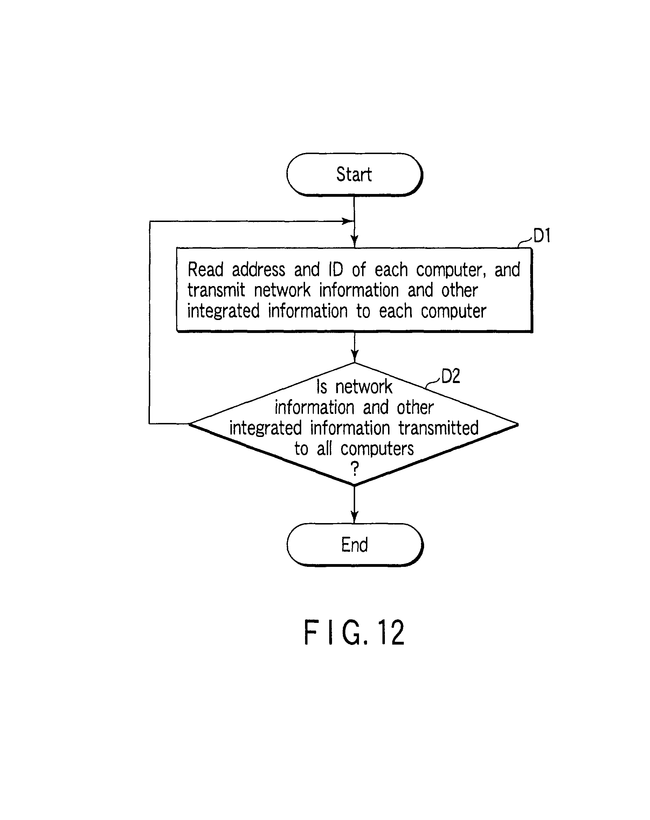

FIG. 12 is a flowchart of the process of delivering information to each computer in the case where the network information is built in the grand computer in the above manner. When a delivery operation is made, the address and ID of each registered computer is read out of a register section (memory), and then, network information is transmitted to each computer using a transmission function (step D1 and D2).

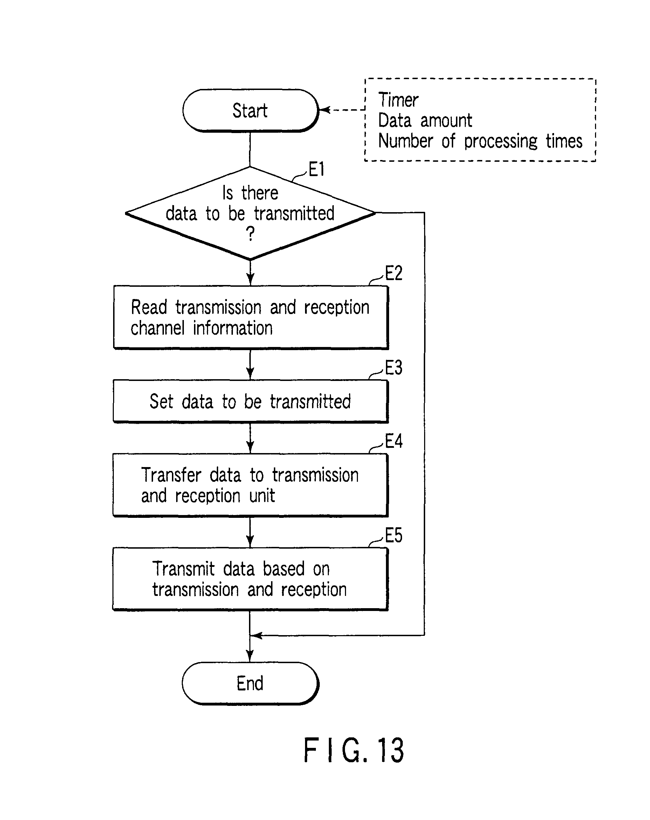

FIG. 13 is a flowchart showing an operation in the case where each computer transmits data to be transmitted to a registered partner computer based on the above network information.

In this case, there are various methods as transmission triggers. More specifically, the data is transmitted at constant intervals by a timer, or is transmitted when the amount of data to be transmitted reaches a predetermined amount of data, or is transmitted when the number of data processing times reaches a predetermined number of times.

The transmitting timing is set in the grand computer or each computer in addition to the network information. In a transmission mode, a check is made whether or not there exists data (described in FIG. 9B) to be transmitted (step E1). If there exists data to be transmitted, the transmission and reception channel information (described in FIG. 5 to FIG. 9) is read (step E2). Next, the data to be transmitted is prepared in a register, and then, is transferred to a transmission and reception unit (step E3 and E4). Then, data transmission is started based on the transmission channel (step E5).

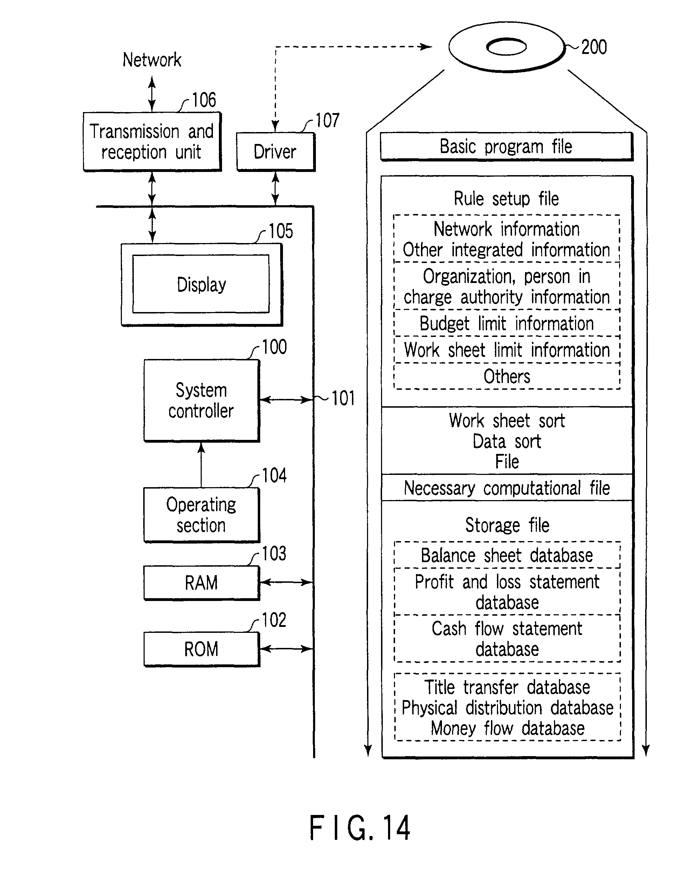

FIG. 14 is a block diagram showing a basic configuration of each computer. In FIG. 14, there is shown a basic configuration of one computer representative of several computers.

In this case, a basic program file, a rule setup file, a work sheet sort file, a data sort file, a necessary computational file and a storage file are stored in one disk. However, these files are not limited to the disk, and may be stored in the memory of computer. Further, these files may be recorded using both memory and disk.

The basic program includes various programs necessary for performing various data processings by the present apparatus. The rule setup file includes the above network information, other integrated information, authority information of organization and person in charge, budget limit information, work sheet limit information, etc.

The integrated information is file information to which the present computer should transmit to the parent or grand computer. The authority information is upper and lower limit check information of the number of commodities when a person in charge gives order and accepts order. The budget limit information is absorbed budget upper limit information given to each department and each organization. The work sheet limit information is information limiting a work sheet usable by organization and person in charge. In this authority information, an organization information table of the organization, a personal (individual) information table of the person in charge, and a dealing commodity information table are referred. Each table is attached with limit information or the like.

The present apparatus includes application software for processing the above various information. There are various processings described in the present specification as functions realized by the above application software, and business management data processing is realized by these functions.

In FIG. 14, a reference numeral 100 denotes a system controller, which controls other functional blocks. A reference numeral 101 denotes a main bus. The main bus 101 is connected with a ROM (Read Only Memory) 102, a RAM (Random Access Memory) 103. Further, the main bus 101 is connected with a display 105, a transmission and reception unit 106, and a disk drive 107 via an interface (not shown). An input operation can be given to the system controller 100 from an operating section 104.

The ROM 102 stores a plurality of computer programs, and executes computational (operation) processing, data capture processing or the like. The system controller 100 executes computer internal processing based on the programs stored in the ROM 102. The RAM 103 is used as a temporary storage section. The system controller 100 temporarily stores the programs read from the disk via the disk drive 107, and then, performs data processing, displays data processing, cumulative processing and data transfer based on the loaded program.

When the transmission and reception unit 106 receives data, the data is captured in a buffer RAM (not shown), and then, the type of data is analyzed. Based on the analyzed result, processing for updating the database on disk or adding the data thereto is executed.

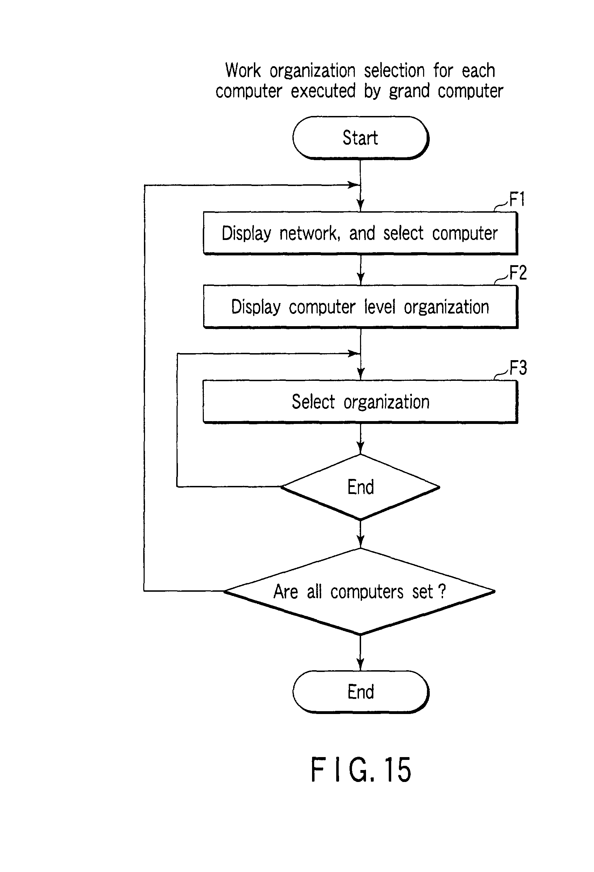

FIG. 15, FIG. 16, FIG. 17 and FIG. 18 show a flowchart when further detailed setup is made with respect to each computer.

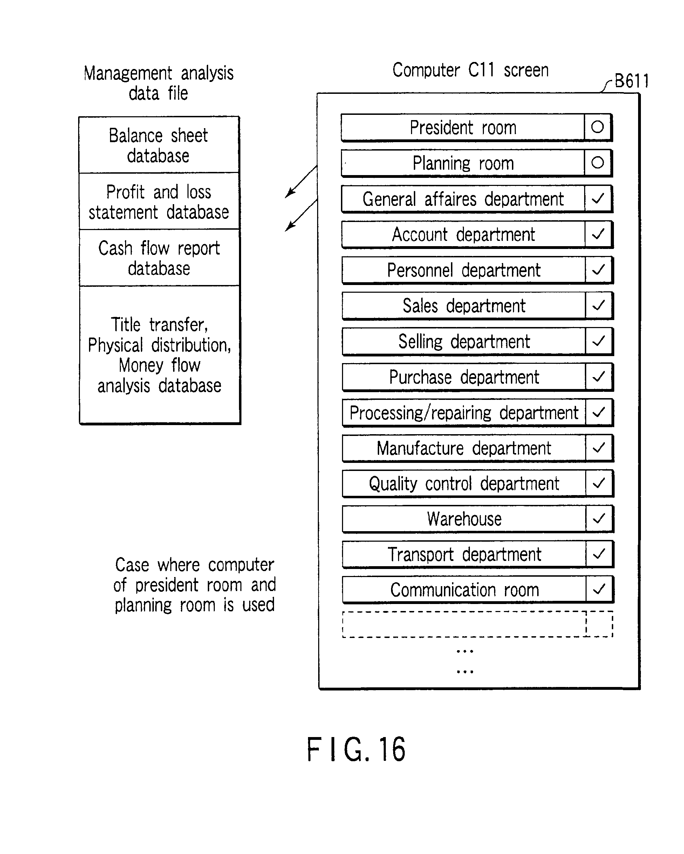

When a network display instruction is given (step F1), for example, the screen as shown in FIG. 2 or FIG. 11 is displayed. On the displayed screen, when the user specifies a computer (moves the cursor to the computer name position, and clicks it) (step F2), an organization setup screen B611 as shown in FIG. 16 is displayed. More specifically, a standard organization name constituting a company is displayed. FIG. 16 shows an example in which the computer C11 is specified. In the case of setting a company specific organization name, it is possible to delete and change the displayed organization name.

Now, if the computer is used in a presidents room and a planning room, a check mark ○ or 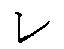 is made in the blank portion after the organization name, for example. One or plurality of computers may correspond to one organization name. Conversely, one computer may correspondent to a plurality of organizations. This processing is executed by the organization selecting operation of FIG. 15 (step F3).

A management analysis data file is built by each computer. The management analysis data file may be arbitrarily built for each company department, group company or the entire group. Further, in accordance with an extension of organization, it is possible to set a computer so as to correspond to the extended organization. The change of arrangement or addition of extension computers is easy.

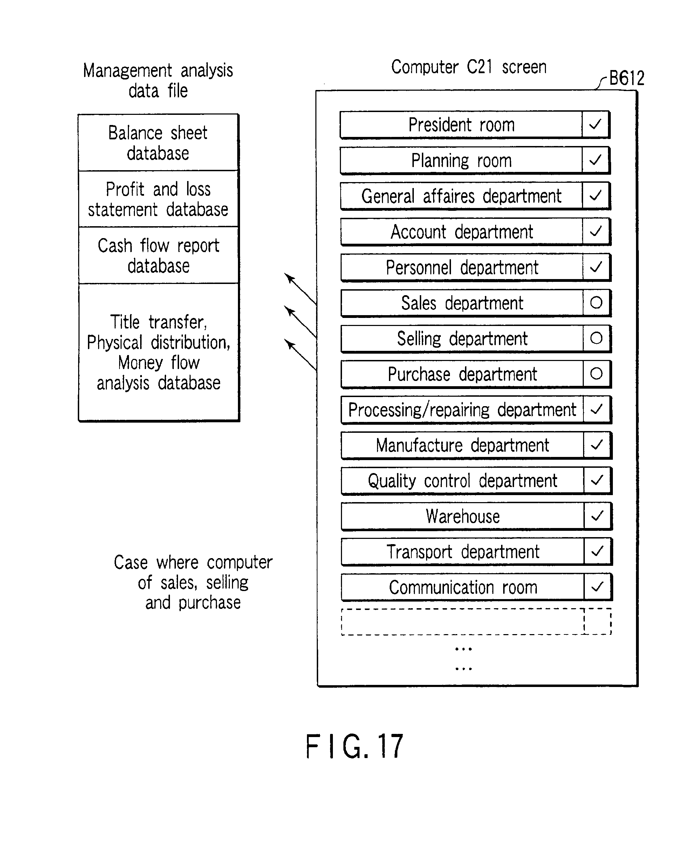

FIG. 17 shows a screen B621 when setting organization name using another computer C21. In the screen B621, there is shown an example in which a sales department, a marketing department and a purchase department use the computer C21. As described above, according to the flow shown in FIG. 15, the correspondence of organization using each computer is made.

In this system, it is possible to limit a work sheet (slip) used in each organization.

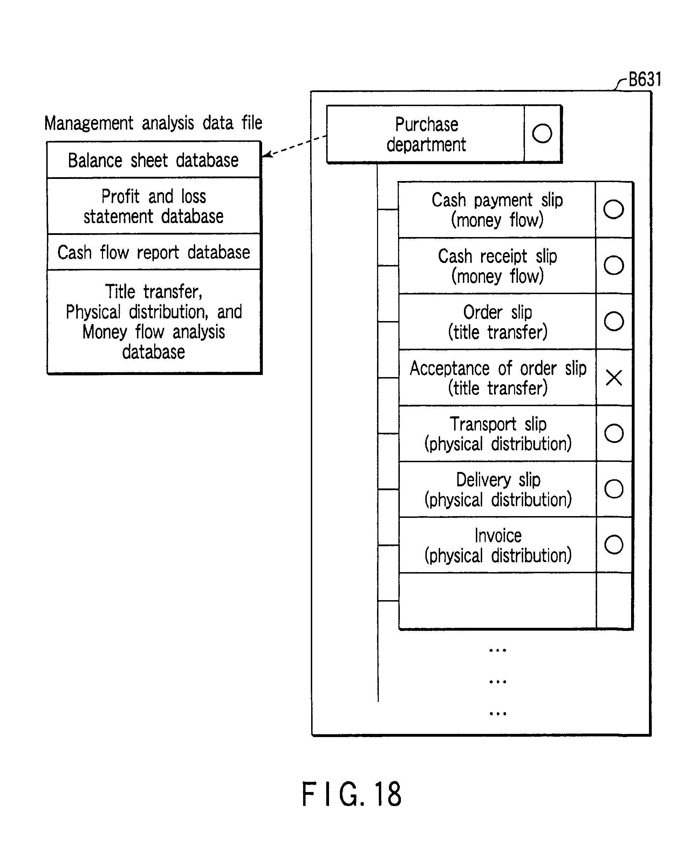

FIG. 18 shows a screen B631 when the purchase department set to the computer C21 is selected. The screen B631 of FIG. 18 is displayed by clicking the purchase department position of FIG. 17 using the cursor. In this case, a typical work sheet is displayed although there exist many work sheets.

FIG. 18 shows an example in which a cash payment slip, a cash receipt slip, an order slip, a transport slip, a delivery slip and an invoice are used as work sheets used in the purchase department. If the above setup is made, in the case where the computer C21 is actually used in the purchase department, when a slip display screen is selected, only a slip having a check mark O is displayed.

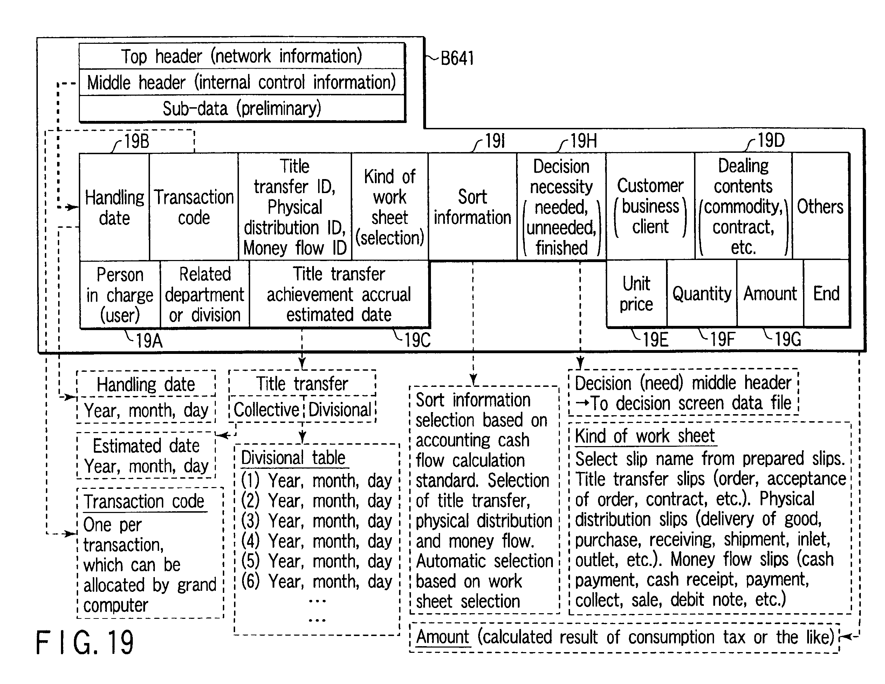

FIG. 19 shows one example of a slip (work sheet) format.

In the system of the present invention, a top header and a middle header exist as common header of the work sheet.

The top header is the network information described before. Further, as the middle header, there exist a transaction code, a title transfer ID, a physical distribution ID, a money flow ID, a kind of work sheet, a client information, etc.

As the transaction code, one code is allocated to one transaction (one work sheet) in this system. The transaction code may be allocated from, for example, the grand computer to each computer.

The title transfer ID is an identification code used when showing a state in which a transaction (kind of work sheet) is established. Further, the title transfer means a state in which a transaction is established. For example, it is states when indents such as order, acceptance of order, contract (e.g., immovable contract of sale, securities contract of sale) accrue.

The physical distribution ID is an identification code used when actual articles (commodity, product, semi-product, material, etc.) are moved (real purchase, real sale, transport, delivery, inlet, outlet, etc.).

The money flow ID is an identification code used when cash is actually moved (cash receipt, cash payment, deposit, etc.).

The user sets whether his inputted transaction affair is title transfer, physical distribution or money flow. The user clicks items displayed on the screen using the cursor, and thereby, the setup work is performed. Next, in a work sheet sort selection item, a work sheet is selected. The work sheet is selected from the previously prepared kinds.

As a representative work sheet, there are the following slips. More specifically, with regard to money flow, there are a cash receipt slip, a cash payment slip, a payment slip, payback slip, a sales slip, a debit note, etc.

Further, with regard to physical distribution, there are slips such as invoice, purchase, receiving, shipment, inlet, outlet, transport, delivery, etc. Furthermore, with regard to title transfer, there are orders, acceptance of order, contract, etc.

FIG. 19 shows a slip input item screen B641 in the case where title transfer is selected. The input item includes a person input item 19A, a handling date input item 19B, an establishment estimated date (on which title transfer achievement accrues) input item 19C, a kind input item 19D such as commodity code dealing name, a unit price input item 19E, a quantity input item 19F, an amount input item 19G, a decision necessity input item 19H, a sort information item 19I, and preliminary items.

In this case, the handling date is automatically inputted. Further, when the unit price and quantity are inputted, the calculated result is automatically inputted to the amount input item. Sorting is previously made based on accounting and book keeping, cash flow calculation standard in accordance with title transfer, physical distribution and kind of work sheet, and the sort information is described in the sort information input item. However, the input screen type is not limited to the type shown in FIG. 19.

Therefore, in the system of the present invention, when transaction information, title transfer information and the like are inputted according to business transaction, the data base for making a balance sheet, profit and loss statement and cash flow statement is automatically prepared.

The following is a description on the decision necessity input item.

When a check of decision necessity is made with respect to the decision necessity input item 19H, the work sheet is once stored in the decision file. The work sheet thus stored in the decision file is displayed on the user's computer screen capable of modifying decision authority and sort information.

The user (person in charge) having authority makes a decision as to whether title transfer, money flow and physical distribution are suitably selected, and the kind of work sheet is suitably selected, and if necessary, the user can make modifications. In the case where the modification is completed, or no modification is made, the user selects "NO" from the decision necessity input item. By doing so, the data is automatically stored in the corresponding database, as described above (see FIG. 14).

As a result, in the system of the present invention, accounting report information is made at unit of computer. Then, the information is transmitted from the child computer to the parent computer or from the parent computer to the grand computer based on the network information. The data from the child computer is collected and stored in the parent computer, and further, the data from the parent computer is collected and stored in the grand computer.

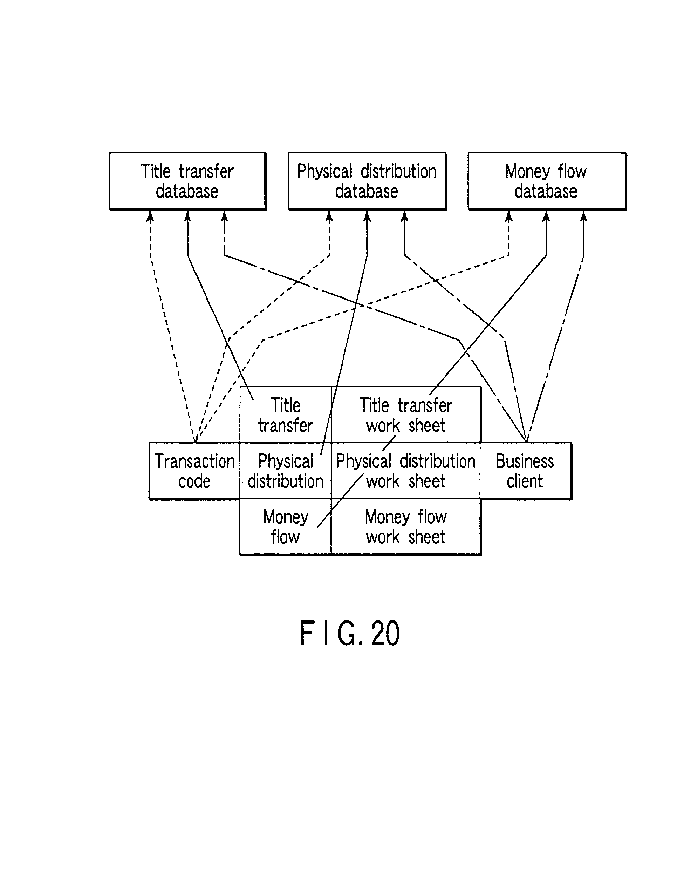

FIG. 20 shows a relation between a title transfer database, physical distribution database and money flow database employed in the system of the present invention.

The title transfer means that a contract and an order is conducted, and more specifically, is a state that articles and money are not still moved. The physical distribution is a state that articles and money are moved. The money flow is a state that money is moved (payment, deposit to bank, etc.).

The database structure of title transfer, physical distribution and money flow is substantially the same; therefore, the physical distribution database is shown. Usually, in a business transaction, there exists negotiation, contract, order and acceptance of order, in view of time transition, and then, concrete physical distribution occurs, subsequently, money flow occurs. However, there is the case where these title transfer, physical distribution and money flow simultaneously accrue.

In the case of controlling each database (relative to title transfer, physical distribution and money flow), when the title transfer data is generated, a physical distribution middle header and a money flow middle header having a common transaction code and business client are generated. The middle headers are stored as a data input middle header in each of the physical distribution database and the money flow database. However, when the title transfer (order, acceptance of order, etc.) accrues, there is the case where physical distribution and money flow still do not accrue; for this reason, no concrete numerical value is inputted to each middle header of the physical distribution and money flow.

In FIG. 20, arrows shown by the dotted line and by the chain line show that common transaction code and business client information are stored in the title transfer database, the physical distribution database and the money flow database. Further, an arrow shown by the solid line shows a state that the work sheet information of the title transfer, physical distribution and money flow is stored in the corresponding title transfer database, physical distribution database and money flow database.

When the physical distribution accrues without the title transfer, a title transfer middle header and a money flow middle header having common transaction code and business client are generated. In this case, since the title transfer is already completed, concrete numerical values are automatically inputted to the title transfer middle header.

Further, when the money flow accrues without the title transfer, a title transfer middle header and a money flow middle header having common transaction code and business client are generated. In this case, since the title transfer, physical distribution and money flow simultaneously accrue, concrete numerical values are automatically inputted to the title transfer and physical distribution middle headers.

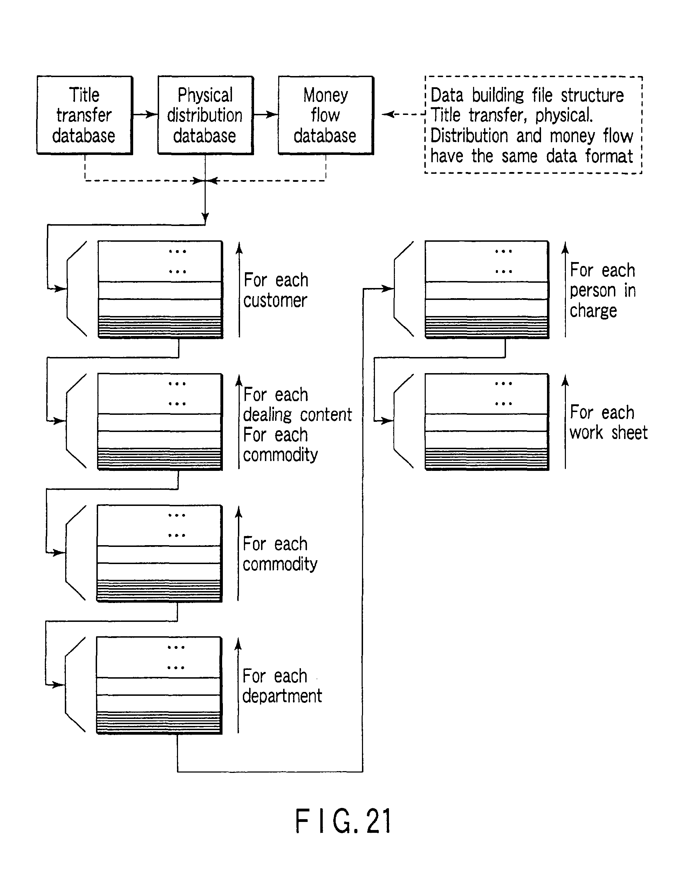

FIG. 21 shows a data sort structure of the title transfer database, the physical distribution database and the money flow database. The data sort structure is the same in the above database; therefore, the data sort structure of the physical distribution database is typically shown.

First, in the first hierarchy, the physical distribution data is classified by customers (business client). In the second hierarchy, one customer block is classified into dealing contents (commodity, etc). Further, in the third hierarchy, one dealing content block is classified into departments. Further, in the fourth hierarchy, one department block is classified into divisions. Further, in the fifth hierarchy, one division block is classified into people in charge. Further, in the sixth hierarchy, one person block is classified into the kinds of work sheet.

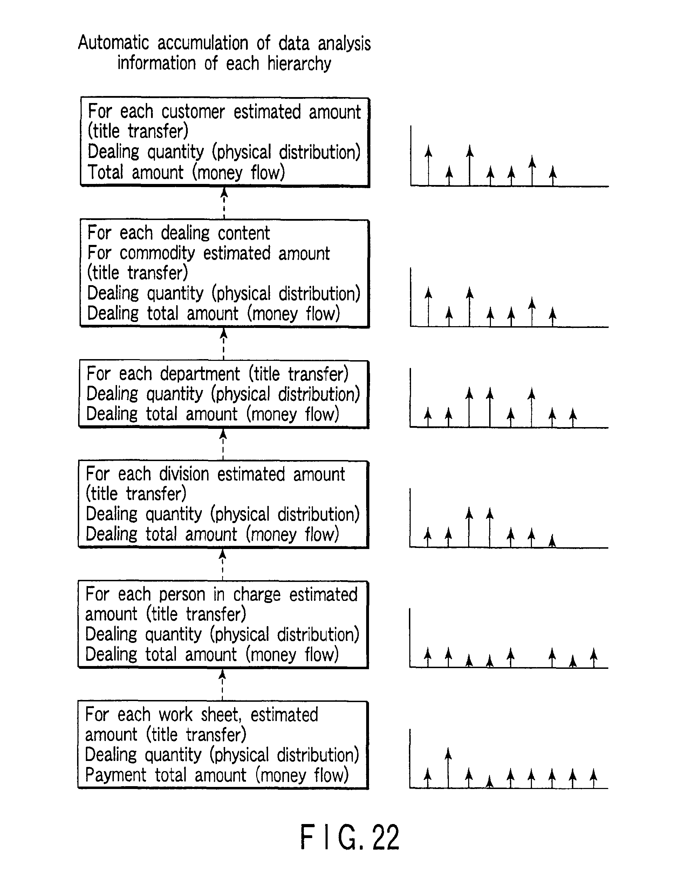

FIG. 22 shows an example in the case of making a graphic display using the above database. By using the money flow database, an amount level can be displayed for each work sheet. Further, a dealing amount level can be displayed for each person in charge, division, commodity, and customer. By using the title transfer database, the dealing amount level can be displayed as a dealing estimated amount level. By using the physical distribution database, the dealing amount level can be displayed as a dealing quantity level.

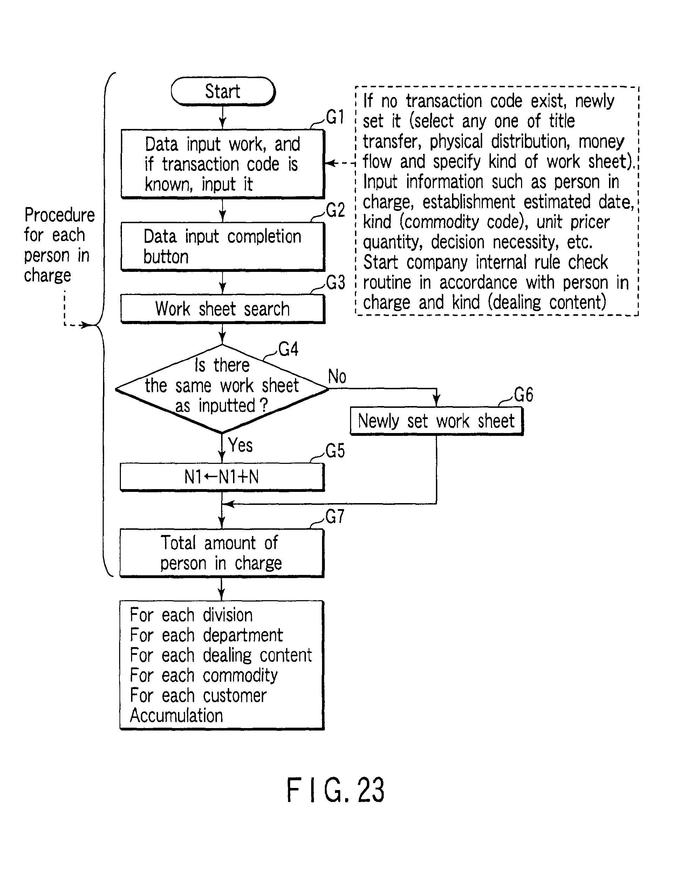

FIG. 23 is a flowchart showing an operation when a person in charge inputs information to a computer. The person in charge inputs data to necessary portions while watching the screen B641 corresponding to the middle header as shown in FIG. 19. The handling date is automatically inputted. If the person in charge knows a transaction code, he inputs it. Namely, the reason why the person in charge previously knows the transaction code is that data has been already inputted to the title transfer database. Thus, the physical distribution, money flow, kind of work sheet, sort information, customer, dealing contents, person in charge, belonging department or division and the like are automatically carried.

Then, the person in charge inputs a unit price and quantity, and operates an end (determination) button (step G1, G2). Unless there is no transaction code, as shown in FIG. 20, a transaction code corresponding to title transfer, physical distribution and money flow is newly generated. When depressing the end button, a decision is made whether a work sheet same as the determined work sheet exists in the database (step G3).

The reason why the same work sheet exists is that the person in charge sells (or conducts) the same commodity before. In this case, summary processing such as amount and quantity is carried out, and then, the total amount is calculated for each work sheet of the person in charge of this case (step G4, G5 and G7). The result is reflected in the database for each work sheet as described in FIG. 21. If there is no determined work sheet, it is added (newly provided) as a work sheet in which the person in charge newly handles (step G6).

Prior to the above processing, a comparison is made between the determined work sheet and authority information, budget limit information and work sheet limit information as shown in FIG. 14 so that a useless data input can be inhibited. The above limit information is prepared in a manner of being transmitted from the grand computer using the network information. Further, the limit information includes company restriction information (authority information, upper limit dealing amount of office goods, commodity dealing quantity limit).

When the above input is made, each hierarchy database is automatically updated for each person in charge, division, department, commodity and customer shown in FIG. 21.

Further, the above input data is transferred to each file of the balance sheet database, profit and loss statement database and cash flow calculation database in accordance with the middle header information. In the file, when new input data is made, the old data is updated. Therefore, every when the data input is made, each database is updated in the present system.

In accordance with the title transfer, physical distribution and money flow identification information, a database having hierarchy as described in FIG. 21 is built. In this case, in the system of the present invention, a design is further made in the way to use the title transfer database.

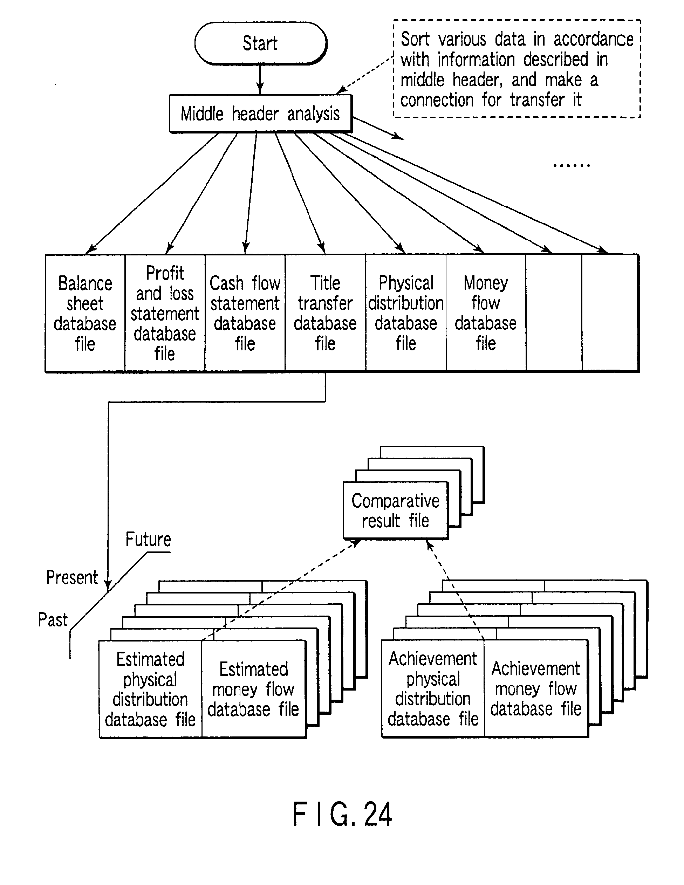

As shown in FIG. 24, when a data input is made, the middle header is analyzed, and then, the data is transferred to each database file. In the case where a data input relative to only title transfer is made, no physical distribution and money flow substantially accrue. For this reason, there is a need of making management for realizing, whether the contents (transaction content, order, and acceptance of order) of procedure will be achieved or not in feature.

Thus, when the data input relative to title transfer is made, by referring to the estimated date (commodity delivery estimated date, payment estimated date, etc.), or by referring to a divisional payment table (divisional commodity delivery estimated date, divisional payment estimated date, etc.) (see FIG. 19), an estimated physical distribution database and an estimated money flow database are built up.

The estimated physical distribution database and the estimated money flow database have the same data structure as described in FIG. 21. In this case, the estimated physical distribution and money flow database are made at unit of day toward past, present and future.

The reason why the data relative to the title transfer is divided into past, present and future is as follows. Because a comparison is made between actuality and estimation when physical distribution and money flow having the corresponding transaction code accrue. Thus, the title transfer database includes an achievement comparative result file.

More specifically, it is possible to know whether commodity has actually been received at a warehouse (inlet) on an estimated date, by making a comparison with the physical distribution database. Further, it is possible to know whether a cash amount is received on an estimated date, by making a comparison with the money flow database. The achievement comparative result file has a data structure having the hierarchy described in FIG. 21.

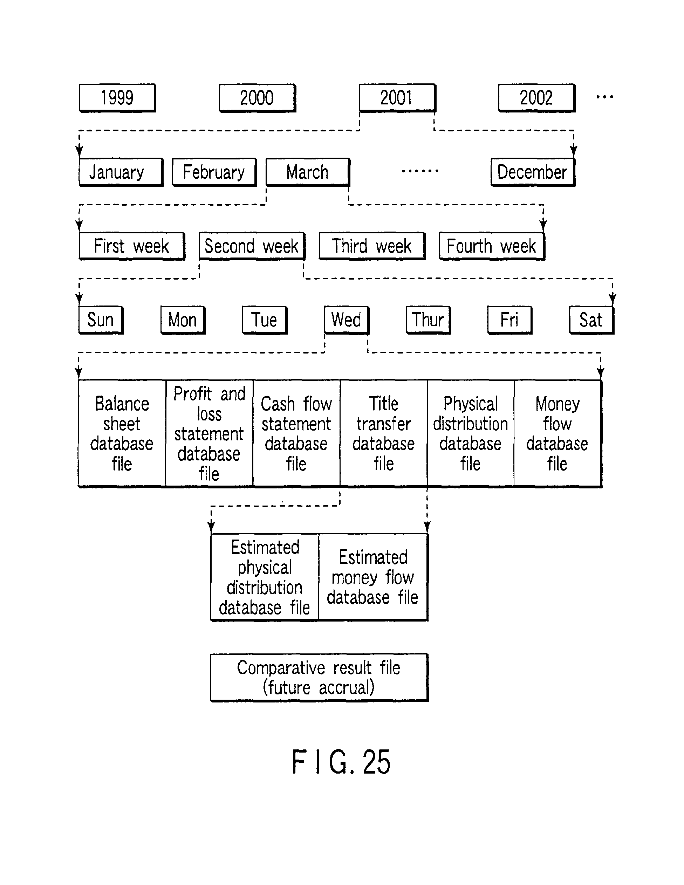

FIG. 25 is a diagram to explain a time progression state of the data structure used in the present invention. When the title transfer occurs, as described above, the estimated physical distribution file and the estimated money flow file are built up. Further, it is possible to automatically prepare each database for making an estimated balance sheet, an estimated profit and loss statement and an estimated cash flow statement from the estimated database. FIG. 25 shows a state that each database for making the estimated balance sheet, profit and loss statement and cash flow statement is automatically built on Wednesday of the second week, in March 2001. The database is made when the title transfer occurs and the divisional table as shown in FIG. 19 is prepared, and in the case where payment or commodity receiving is decided on Wednesday of the second week, in March 2001. Of course, in the system of the present invention, each database has the data structure as shown in FIG. 21; therefore, it is possible to obtain various analysis graphs in the estimated physical distribution file and the estimated money flow file.

As a result, in the system of the present invention, it is possible to make a provisional report showing a future management state.

The present invention is not limited to the above embodiment.

The network information is made in the grand computer, and is delivered from the grand computer to each computer. However, the network information, middle header and limit information may be made by other computers. Further, the information is recorded in a recording medium (disk), and may be installed into each computer.

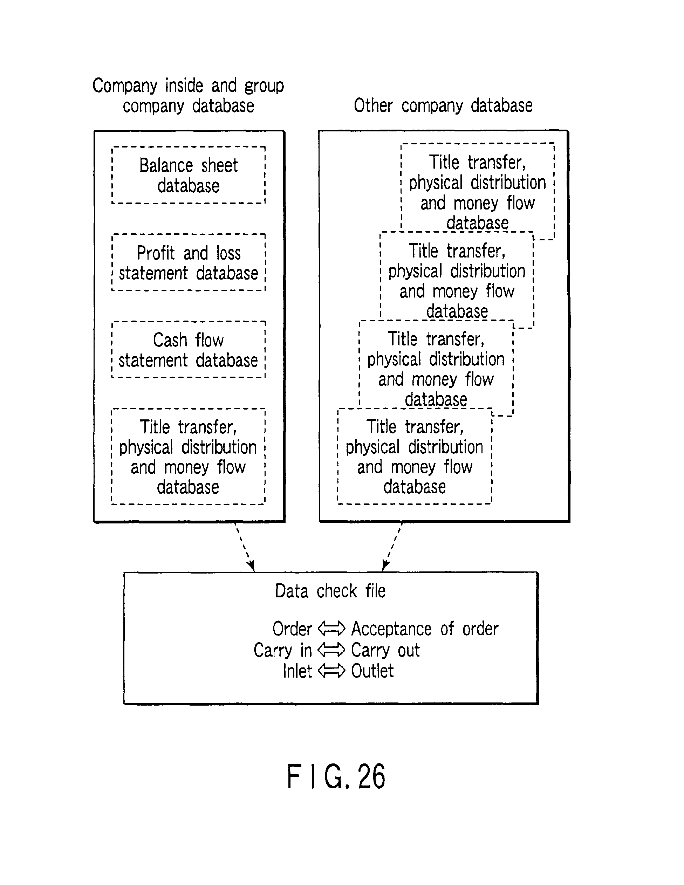

The present invention is not limited to the above embodiment, and information data from another company may be accumulated as shown in FIG. 26. Of course, in this case, the same system and type as the above computer is employed in another company.

The data from another company includes order, acceptance of order slip information, a debit note, carry-in and out slip, etc. When the information is transmitted, it is compared between the present company and another company, and then, management state can be confirmed. For example, there is information such as payment, carry-in, expenditure, etc.

Further, of course, the system of the present invention has an inventory control data file.

In the case of setting each computer, of course, it is possible to select and limit a file to be transmitted to the upper computer.

The present invention is not limited to the above embodiment.

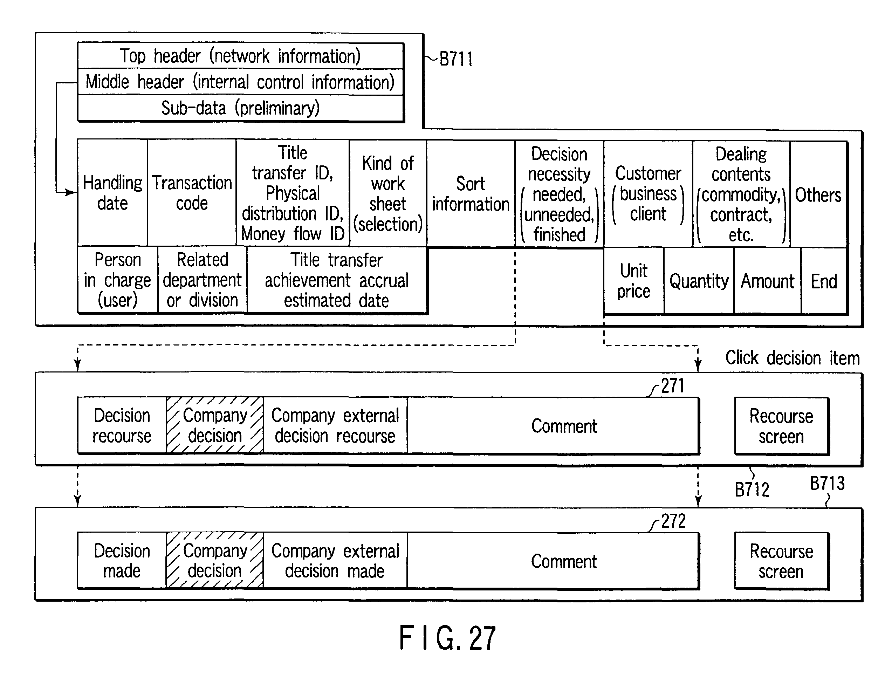

FIG. 27 shows screens B711 to B713 showing another processing method using the middle header. When the person in charge inputs data to a work sheet such as a payment bill (cash payment slip), there is the case where the content of sort information (e.g., entertainment expense, expenditure, personnel expense, which belongs to cash payment slip) is not specified. In such a case, a work sheet and the middle header including the work sheet is transmitted to a computer of internal or external expert together with its descriptive information (comments) via the network, and thereby, it is possible to receive approval (decision) processing. When selecting the screen B711 showing the middle header, a middle header as shown in FIG. 27 is displayed, and then, when inputting a transaction code, display whether decision is required or made is shown in the decision item. When clicking the decision item, as shown in the intermediate state of FIG. 27, a decision recourse screen is displayed on the screen B721.

The user clicks the button as to whether he desires internal decision or external decision (e.g., accounting firm, licensed tax accountant, etc.). The decision recourse is made, and when the end button (not shown) is clicked, the middle header is automatically transmitted to a computer for carrying out an internal or external decision. The destination to be transmitted is set by the network information. In FIG. 27, as the display example (271), the color of the internal decision item changes, and thereby, the display shows the case where the internal decision recourse is made. If the decision is already made, as the display example (272) on the screen B713, the color of the internal decision item changes, and then, a decision-made item is displayed.

Therefore, in the system of the present invention, it is possible to obtain reliability in the sorted result. This means that the content of the accounting report and management report has high reliability.

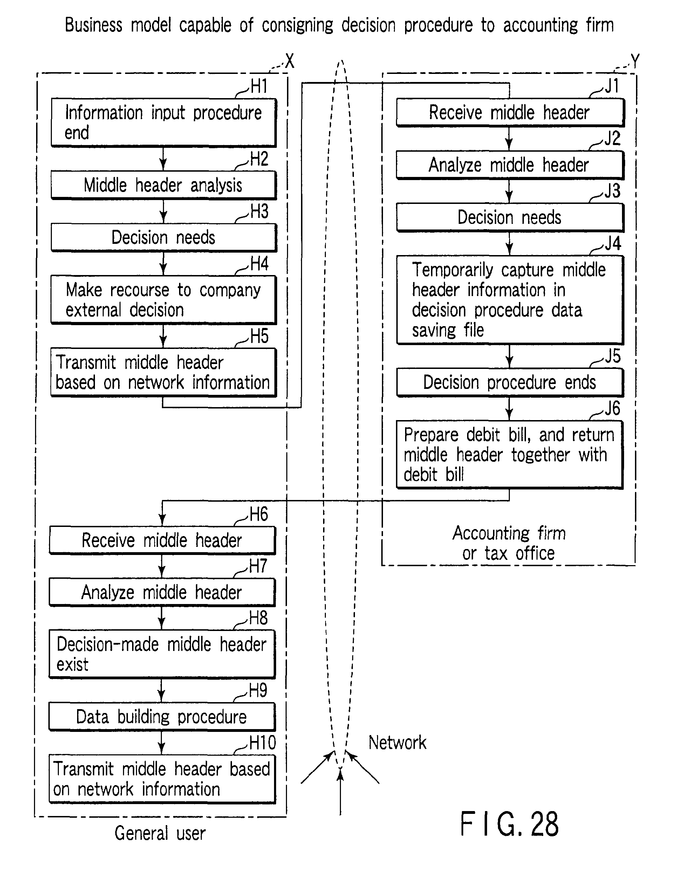

FIG. 28 shows a transfer path of the middle header in the case where the above company external decision procedure is made. In a user's computer X, when information input to the work sheet is completed (step H1), the analysis procedure of middle header is made (step H2). In the case where a decision need flag is detected in the decision item, a decision is made whether a company internal or external decision should be made (step H3 and H4). If a flag exists in the company external decision item, the middle header is transferred to the computer designated by the network information via a network (step H5).

A computer Y to which the middle header is sent receives the middle header, and then, analyzes the content of the middle header (step J1 and J2). In the case where there exists a middle header needing a decision, the middle header information is once captured in a decision procedure data saving file (step J3 and J4). In this case, the receiving computer is a computer of an accounting firm or tax office.

In the receiving computer Y, an accountant or tax office clerk expands a decision procedure screen. Then, they display the middle header on the screen, and further, checks the comment of the middle header and the content of work sheet described in the middle header. In this case, by personal judgment, a decision procedure is made. In the decision procedure, they input sort information. Further, they click the decision made item, and then, click the decision end button (step J5). By doing so, a debit bill as compensation for the decision is prepared (the bill has the same format as the middle header, and the work sheet is used as debit bill), and then, they return the customer's middle header (decision procedure made) and debit bill via a network (step J6).

The user side receives the middle header and analyzes it, and when there exists a decision middle header, executes a data building procedure using the middle header information. The debit bill is subjected to data processing as payment data (steps H6, H7, H8 and H9).

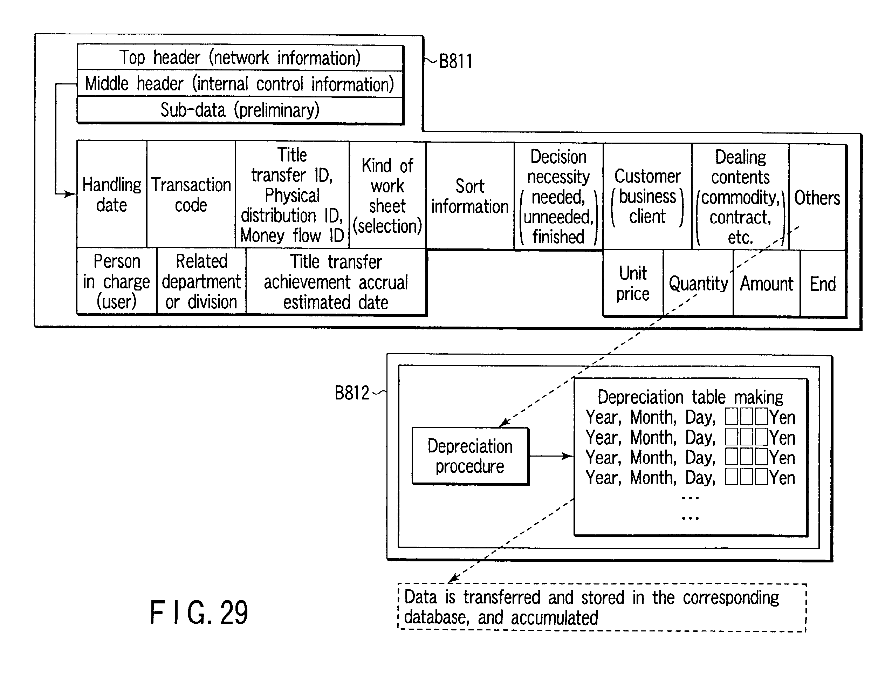

FIG. 29 is a view showing screens B811 and B812 for explaining another function of data processing function by the computer of the present invention. The middle header may be provided with other items. The item is used for preparing an amount table for depreciation when article buys equipments. More specifically, when other items are clicked, a depreciation table is displayed as the screen B812. The user can input a depreciation date and amount. In this case, a method for making the depreciation table is not limited to the method for making the depreciation table, and depreciation year and cost are inputted, and thereby, a depreciation for each year may be automatically calculated.

When the depreciation table is made, the table information is transferred to a database file of the corresponding date.

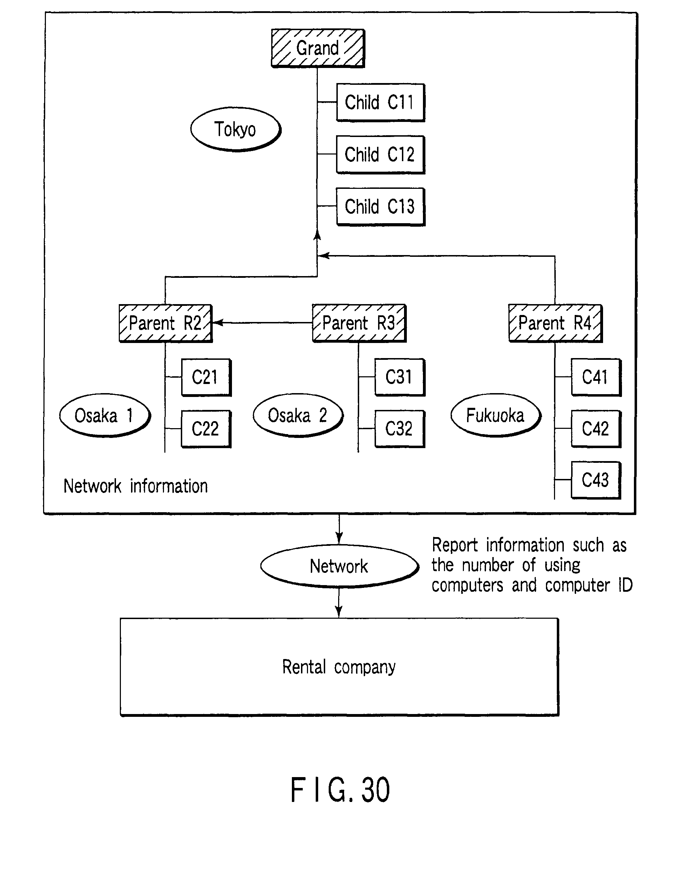

FIG. 30 shows still another embodiment of the present invention. As described above, the network information controls the computers used via the network. Thus, the network information is more effectively used. For example, there is the case where the user borrows these computers from a rental company while paying the rental charge. In such a case, the rental company needs to check a using state of the lent computer. The user can make a setup such that the number of using computers and the computer ID are automatically transmitted from the network information to the rental company via network. By doing so, the rental company can check the number of computers and the computer ID in which the user is using. FIG. 30 shows a state that the network information is transferred to the rental company via network. If the number of computers and the computer ID is changed, the rental company can check the change.

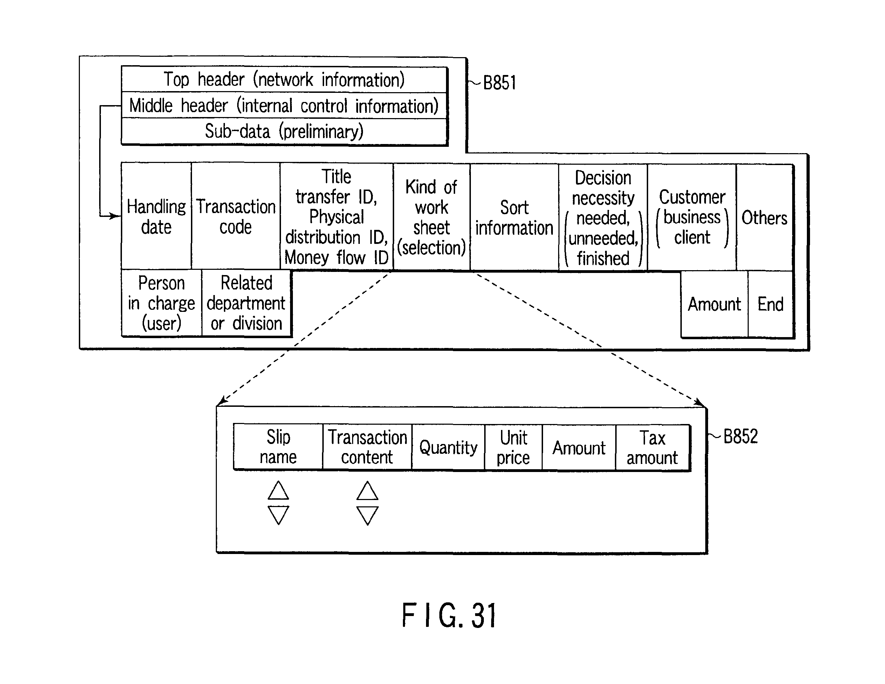

FIG. 31 shows another embodiment of the middle header.

The middle header described before has the item describing unit price, quantity and amount in the first hierarchy. However, the middle header is not limited to the first hierarchy, and a second hierarchy may be provided as shown in FIG. 31. More specifically, in a screen B851 stage, when clicking the kind of work sheet item, in a second stage, that is, in a screen B852, there is displayed a lip having a slip name, transaction content, quantity, unit price, amount and tax, and thereafter, the user may input concrete numerical values to each item.

In the middle header display screen, the item name is shown in each data input portion in FIG. 31. A data input blank exists as one of the item name, and the user moves the cursor to the blank position, and then, inputs the data. Further, in the slip screen of FIG. 31, by operating a scroll button, it is possible to select the slip name and transaction content.

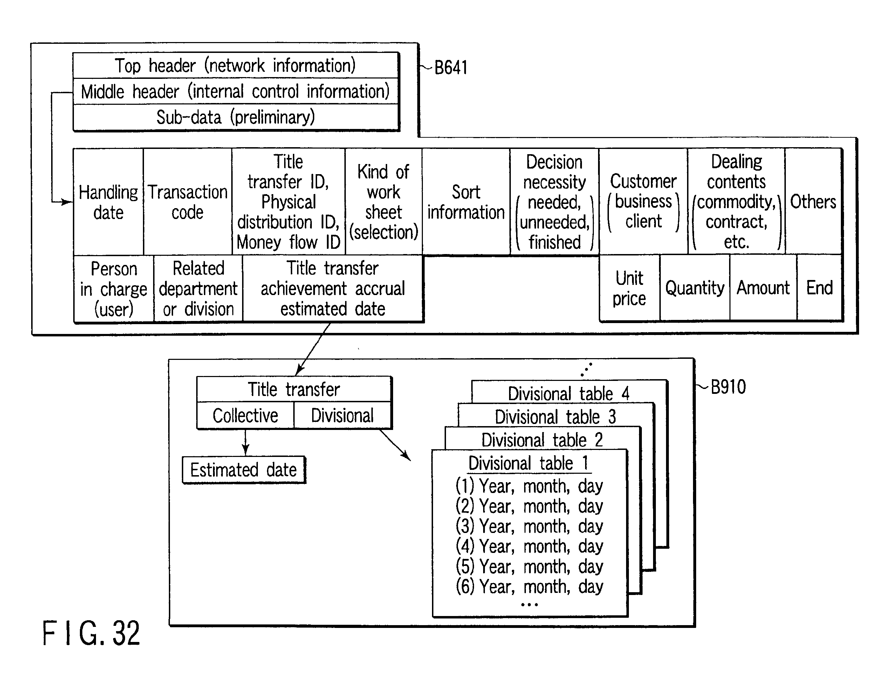

FIG. 32 is a view to explain the case of using the title transfer achievement accrual estimated date item. In FIG. 31, the screen B641 is the same as the screen described in FIG. 19.

When the user clicks the title transfer achievement accrual estimated date item, there is displayed a screen B910 for selecting "collective" or "divisional" as item. When a business transaction is established, a commodity transaction (or contract) slip and a charge payment (or contract) slip are made. In such a case, a commodity receiving estimated date or charge payment estimated date must be set. Then, when the user clicks the title transfer achievement accrual estimated date item, a decision must be made whether the commodity receipt or payment is made "collectively" or "divisionally". When selecting the item "collective", a screen for inputting an estimated date is displayed, the user inputs a commodity receipt or payment estimated date thereto. When selecting the item "divisional", the user inputs a plurality of commodity receipt or payment estimated dates to the table.

Based on the estimated date information, as shown in FIG. 24, the above data is stored in the estimated physical distribution database or money flow database. Therefore, the date is used as comparative information when physical distribution or money flow achievement accrues.

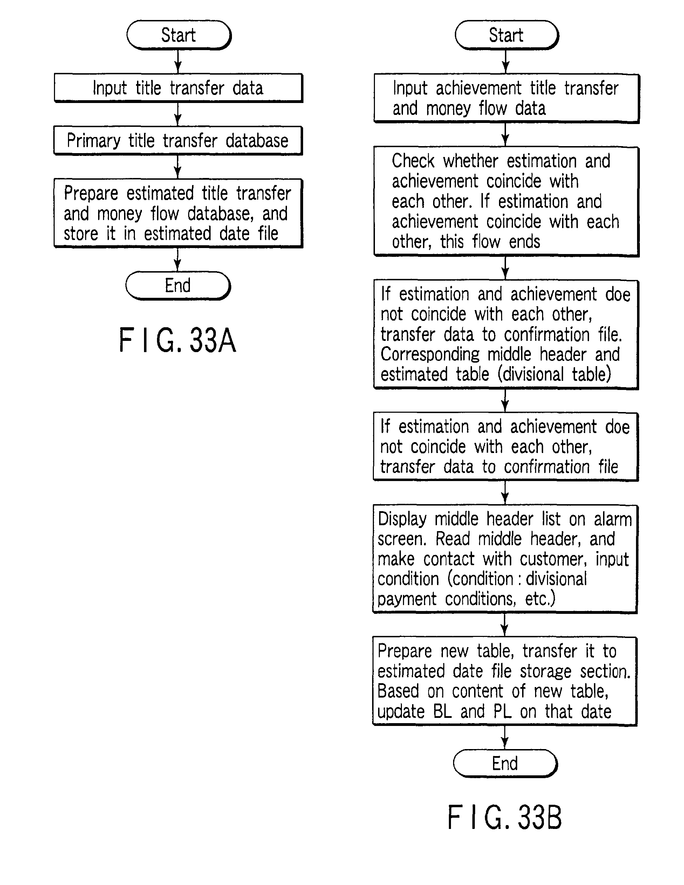

FIG. 33A is a flowchart in the case where the estimated physical distribution or money flow database as shown in FIG. 24 is built when a title transfer data is inputted. When a title transfer data is inputted, a primary title transfer database is built. FIG. 33B is a flowchart for checking whether estimation and achievement coincide with each other. If the estimation and achievement coincide with each other, the procedure ends. If the estimation and achievement does not coincide with each other, the achievement middle header is transferred to a confirmation file, and then, a confirmation work is done. Next, in the case where the user desires to check the estimation and achievement, a check operation (not shown in this step) is made. Then, a middle header list stored in the confirmation file is displayed on an alarm screen.

When the user selects both middle header of the estimation and achievement, the estimated date table is displayed. In this case, the operator conducts a meeting with a customer and it is possible to modify the estimated date. As a result, a newly changed title transfer database is made. When operating a data update end button, based on the updated title transfer database, the balance sheet database on the estimated date is modified as described in FIG. 26.

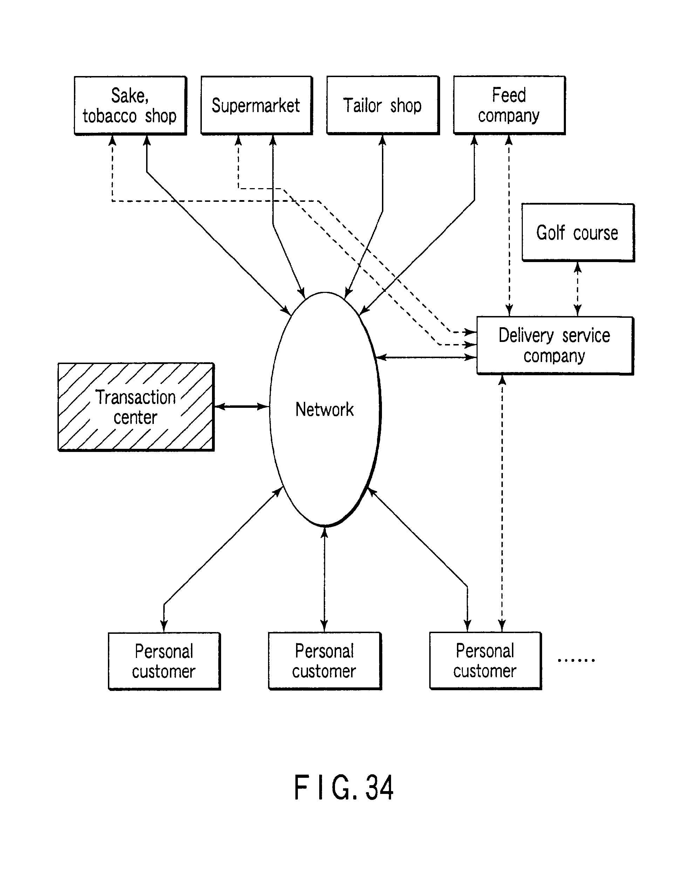

FIG. 34 shows an application example of the present invention. According to the present invention, by network information, communication is made between computers of personal customers and various stores. Further, it is possible to specify a kind (only order or acceptance of order, only debit bill) of communicating information. Therefore, for example, the personal customer can transmit a shopping list to a transaction center. The transaction center can transmit order information and its delivery destination (e.g., delivery service company) to a food company, a tailor shop based on the shopping list. Further, it is possible to transmit goods to be delivered and destination information to the delivery service company. The transaction center can collect a fee from registered shops or customers.

## Claims

1. A network building method comprising the following steps of:
setting regional information using a computer (A1);
setting place information using the computer at the region (A1);
setting information on the number of computers used at the place (A2);
setting at least address and identification information of a plurality of the computers (A3, A4);
setting a parent computer of the computers used at each place (A5) ;
setting at least one grand computer of the computers used at each place (A5);
setting information reception channel information of the grand computer (A6);
setting information transmission channel information of a child computer depending on the grand computer (A6);
setting information transmission and reception channel information of the parent computer (A6);
setting information transmission channel information of a child computer depending on the parent computer (A6); and
setting this information as network information.

2. The network building method according to claim 1, **characterized in that** the network information is delivered to each computer via communication means.

3. The network building method according to claim 1, **characterized in that** the network information made by the network building method is recorded to a disk freely removable to a computer, and is distributed to each computer.

4. The network building method according to claim 1, **characterized in that** the network information further includes operation limit information with respect to each computer.

5. The network building method according to claim 1, **characterized in that** file specific information of a transmission file to be by each computer exists in addition to the network information.

6. The network building method according to claim 5, **characterized in that** the file specific information of a transmission file includes at least balance sheet database, profit and loss statement database.

7. The network building method according to claim 1, **characterized in that** limit information for a limiting data processing content of each computer exists in addition to the network information.

8. The network building method according to claim 7, **characterized in that** the limit information is limit information relating to a work sheet being used.

9. The network building method according to claim 1, **characterized in that** check information to be checked exists in data processing of each computer in addition to the network information.

10. The network building method according to claim 8, **characterized in that** the check information is check information indicative of organization and/or authority of person in charge.

11. A network building apparatus for building network information in which child computer information is transmitted to a parent computer of the child computer, and parent computer information is transmitted to a grand computer, **characterized by** comprising:
regional information storage means for setting regional information using a computer (A1);
regional information storage means for setting place information using the computer at the region (A1) ;
computer number storage means for setting information on the number of computers used at the place (A2);
identification information storage means for setting at least address and identification information of a plurality of the computers (A3, A4);
parent computer information storage means for setting a parent computer of the computers used at each place (A5);
grand computer information storage means for setting at least one grand computer of the computers used at each place (A5);
reception channel information storage means of the grand computer (A6);
transmission channel information storage means of a child computer depending on the grand computer (A6);
information transmission and reception channel storage means of the parent computer (A6);
transmission channel information storage means of a child computer depending on the parent computer (A6); and
means for delivering network information stored in each storage means (A6).

12. A management report acquiring method for building network information in which child computer information is transmitted to a parent computer of the child computer, and parent computer information is transmitted to a grand computer, **characterized by** comprising the following steps of:
setting regional information using a computer (A1);
setting place information using the computer at the region (A1);
setting information on the number of computers used at the place (A2);
setting at least address and identification information of a plurality of the computers (A3, A4);
setting a parent computer of the computers used at each place (A5);
setting at least one grand computer of the computers used at each place (A5);
setting information reception channel information of the grand computer (A6);
setting information transmission channel information of a child computer depending on the grand computer (A6);
setting information transmission and reception channel information of the parent computer (A6);
setting information transmission channel information of a child computer depending on the parent computer (A6); and
setting transmission file information including a company management status data as information to be transmitted by each computer, in addition to the network information (A6).
